# EUROPÄISCHE PATENTSCHRIFT

(11) **EP 4 456 769 B1**
(45) Veröffentlichungstag und Bekanntmachung des Hinweises auf die Patenterteilung: **17.09.2025**
(21) Anmeldenummer: 23727478.2
(22) Anmeldetag: 11.05.2023
(51) Int. Cl.: A47J 31/46, A47J 31/60, A47J 31/44

(54) **VERFAHREN UND DAMPFABSCHEIDER ZUM DAMPFABSCHEIDEN AUS EINEM FLÜSSIG-GAS-GEMISCH, HEISSWASSERSPENDER, VERFAHREN ZUR REINIGUNG EINES DAMPFABSCHEIDERS, VERWENDUNG EINES DAMPFABSCHEIDERS**
METHOD AND VAPOUR SEPARATOR FOR SEPARATING STEAM FROM A LIQUID GAS MIXTURE, HOT WATER DISPENSER, METHOD FOR CLEANING A STEAM SEPARATOR, USE OF A STEAM SEPARATOR
PROCEDE ET SEPARATEUR DE VAPEUR PERMETTANT DE SEPARER LA VAPEUR D'UN MELANGE LIQUIDE-GAZ, DISTRIBUTEUR D'EAU CHAUDE, PROCEDE DE NETTOYAGE D'UN SEPARATEUR DE VAPEUR, UTILISATION D'UN SEPARATEUR DE VAPEUR

(30) Priorität: 03.06.2022 EP 22177210
(43) Veröffentlichungstag der Anmeldung: 06.11.2024
(73) Patentinhaber: JURA ELEKTROAPPARATE AG, 4626 Niederbuchsiten (CH)
(72) Erfinder: PROBST, Stephan, 4573 Lohn-Ammannsegg (CH); BALTENSPERGER, Samuel, 5420 Ehrendingen (CH)
(74) Vertreter: Mertzlufft-Paufler, Cornelius
(86) Internationale Anmeldenummer: PCT/EP2023/062666
(87) Internationale Veröffentlichungsnummer: WO 2023/232430

(56) Entgegenhaltungen:
- EP-A1- 2 353 473
- CN-A- 108 392 082
- CN-A- 108 793 300
- CN-A- 109 259 605

## Beschreibung

Die Erfindung betrifft ein Verfahren zum Dampfabscheiden aus einem Flüssig-Gas-Gemisch gemäß Anspruch 10.

Die Erfindung betrifft weiter einen Dampfabscheider gemäß Anspruch 1.

Flüssig-Gas-Gemische können insbesondere dann entstehen, wenn eine Flüssigkeit erhitzt wird und/oder wenn eine Flüssigkeit in einem erhitzen Zustand transportiert wird. So kann beispielsweise Wasser ab bestimmten Temperaturen Dampf ausbilden- es kann somit ein zweiphasiges Wasser-Dampf-Gemisch entstehen.

Wasser-Dampf-Gemische können dann problematisch sein, wenn Wasser oder eine wasserhaltige Flüssigkeit gezielt aus einer Öffnung austreten soll, um beispielsweise portioniert werden zu können. Beispielsweise ist es bei Kaffeevollautomaten nachteilig, wenn ein Kaffee-Dampf-Gemisch aus der Maschine austritt, da durch den Dampfanteil Spritzer auftreten können. Der Dampfanteil und somit die Bildung von Spritzern ist umso größer, je höher die gewählte Temperaturstufe, beispielsweise eine Brühstufe, ist. Somit sind viele Kaffeevollautomaten in ihrer maximalen Temperaturstufe limitiert, wodurch die Qualität eines Kaffeegetränks vermindert sein kann. CN108392082B offenbart einen Dampfabscheider.

Ferner betrifft die Erfindung einen Heißwasserspender, insbesondere einen Kaffeevollautomat gemäß Anspruch 13.

Die Erfindung betrifft weiterhin ein Verfahren zur Reinigung eines Dampfabscheiders gemäß Anspruch 14.

Schließlich betrifft die Erfindung die Verwendung eines Dampfabscheiders gemäß Anspruch 15.

Der vorliegenden Erfindung liegt die Aufgabe zugrunde, das Abscheiden von Dampf von einer Flüssigkeit, insbesondere bei Arbeiten mit Heißwasserspendern, vorzugsweise Kaffeevollautomaten, zu verbessern.

Zur Lösung der genannten Aufgaben sind erfindungsgemäß die Merkmale des Anspruchs 10 vorgesehen. Insbesondere wird somit zur Lösung der genannten Aufgabe bei einem Verfahren der eingangs beschriebenen Art erfindungsgemäß vorgeschlagen, dass sich ein Flüssigkeitsanteil des Flüssig-Gas-Gemischs sammelt und wobei ein Gasanteil oberhalb des gesammelten Flüssigkeitsanteils abgeführt wird, insbesondere wobei der Gasanteil eine Gasphase des Flüssigkeitsanteils ist. Durch das Sammeln des Flüssig-Gas-Gemischs, in einer Kammer wie nachfolgend beschrieben oder beansprucht, kann ein bestimmtes Volumen eines Flüssigkeitsanteils von einem Gasanteil abgetrennt werden. Das Sammeln des Flüssig-Gas-Gemischs kann insbesondere dann vorteilhaft sein, wenn ein Flüssigkeitsanteil portioniert werden soll. Ferner kann von Vorteil bei dem erfindungsgemäßen Verfahren sein, dass durch das Sammeln des Flüssig-Gas-Gemischs die Trennung des Gasanteils vom Flüssigkeitsanteil einen besonders hohen Wirkungsgrad aufweist. Somit kann das Arbeiten mit beispielsweise Heißwasserspendern verbessert werden.

Bei dem erfindungsgemäßen Verfahren wird der Gasanteil oberhalb des gesammelten Flüssigkeitsanteils abgeführt. Somit kann insbesondere ein Gasanteil, beispielsweise Wasserdampf, einfach und vorzugsweise ohne weitere Verfahrensschritte oder Abführvorrichtungen abgeführt werden. Dies ist insbesondere nützlich bei Heißwasserspendern, insbesondere Kaffeevollautomaten, bei denen Wasser erhitzt wird und Wasserdampf entsteht, also insbesondere wobei der Gasanteil eine Gasphase des Flüssigkeitsanteils ist. Insbesondere von Vorteil ist, dass der oberhalb des gesammelten Flüssigkeitsanteils abgeführte Gasanteil sich nicht störend auf den Fluss, insbesondere die Abfuhr, des Flüssigkeitsanteils auswirkt.

Das erfindungsgemäße Verfahren wird mit einem Dampfabscheider gemäß Anspruch 1 durchgeführt. Besonders bevorzugt kann ein wie hierin beanspruchter und nachfolgend beschriebener Dampfabscheider Verwendung finden.

Bei einer vorteilhaften Ausgestaltung kann vorgesehen, dass ein Zulauf an Flüssig-Gas-Gemisch und ein Ablauf des gesammelten Flüssigkeitsanteils so bemessen ist, dass sich ein Pegelstand des Flüssigkeitsanteils ausbildet. Vorteilhaft an einem Pegelstand kann sein, dass eine Fläche des Flüssigkeitsanteils entsteht, die auf einer gewissen Höhe gehalten sein kann. Dadurch kann der Wirkungsgrad bei der Trennung des Gasanteils vom Flüssigkeitsanteil besonders hoch sein.

Bei einer vorteilhaften Ausgestaltung kann vorgesehen, dass nachströmendes Flüssig-Gas-Gemisch dem gesammelten Flüssigkeitsanteil zugeführt wird, insbesondere - zumindest für einen Gasanteil unterhalb eines Schwellwerts - unterhalb des Pegelstands eingeleitet wird. Somit kann dem Flüssigkeitsanteil kontinuierlich einem Flüssig-Gas-Gemisch zugeführt werden, wodurch ein Pegelstand zumindest erhalten bleiben oder sogar gebildet bzw. erhöht werden kann. Somit kann ein Wirkungsgrad des Abscheidens des Gasanteils vom Flüssigkeitsanteil stabilisiert und/oder reguliert werden. Ferner von Vorteil kann sein, dass durch die Zufuhr unterhalb des Pegelstandes Blasen und Verwirbelungen bei dem Flüssigkeitsanteil vermieden werden können. Somit kann ein Verfahren vorteilhaft an unterschiedliche Temperaturstufen angepasst werden. Steigt der Gasanteil, so wird sich der Pegelstand häufig verringern. Somit kann bei hohem Gasanteil die Einleitung oberhalb des Pegelstandes erfolgen. Im Reinigungsmodus mit sehr geringem Gasanteil oder ohne Gasanteil wird dagegen die Einleitung unterhalb des Pegelstandes erfolgen.

Bei einer vorteilhaften Ausgestaltung kann vorgesehen, dass in einem Reinigungsschritt ein Zulauf an Flüssig-Gas-Gemisch derart erhöht und/oder ein Ablauf des gesammelten Flüssigkeitsanteils derart verringert wird, dass eine Abführung für den Gasanteil geflutet wird. Somit kann eine Flüssigkeit während eines Reinigungsschritts über die Abführung, beispielsweise das nachfolgende beschriebene und/oder beanspruchte Entlüftungsrohr, für den Gasanteil geleitet werden, sodass auch die Abführung gereinigt werden kann. Somit können beispielsweise Kalkablagerungen entfernt werden, wodurch eine Verstopfung insbesondere der Abführung verringert bzw. vermieden werden kann. Insgesamt kann somit vorzugsweise ein wie nachfolgend beschriebener oder beanspruchter Dampfabscheider gereinigt werden, wodurch der Dampfabscheider besonders langlebig sein kann.

Insbesondere kann dabei vorgesehen sein, dass eine Temperatur des Flüssig-Gas-Gemischs derart reduziert wird, dass der Gasanteil reduziert ist oder gegen Null geht. Somit kann ein Reinigungsschritt ohne die Entstehung von Gasblasen in dem Flüssigkeitsanteil vollzogen werden, wodurch eine Reinigung besonders einheitlich durchgeführt werden kann.

Bei einer vorteilhaften Ausgestaltung kann vorgesehen sein, dass ein Zulauf an Flüssig-Gas-Gemisch durch einen Phasenanschnitt an einer Pumpe gesteuert wird. Beispielsweise kann vorgesehen sein, dass durch die Pumpe der Volumenstrom des Zulaufs geregelt werden kann. Es kann nämlich vorgesehen sein, dass sich eine Vorrichtung, in der ein Verfahren zum Dampfabscheiden eines Flüssig-Gas-Gemischs durchgeführt wird, insbesondere ein wie nachfolgend beschriebener oder beanspruchter Dampfabscheider, bei maximalem Zulauf füllt. Dies kann zur Reinigung der Vorrichtung vorgesehen sein. Je kürzer eine Arbeitspause der Pumpe ist, umso größer kann über die gesamte Zeit eines Reinigungsvorgangs der Zulauf werden. Somit kann beispielsweise über die Pumpe, bzw. durch eine Taktung der Pumpe, der Zulauf an Flüssig-Gas-Gemisch derart erhöht werden, dass sich, wie beispielsweise zuvor beschrieben, die Abführung für den Gasanteil flutet. Somit können über die Pumpe vorteilhaft zwischen verschiedenen Betriebsmodi realisiert sein.

Alternativ oder zusätzlich sind zur Lösung der genannten Aufgabe erfindungsgemäß die Merkmale des nebengeordneten, auf einen Dampfabscheider gerichteten Anspruchs vorgesehen.

Zur Lösung der genannten Aufgabe bei einem Dampfabscheider der eingangs beschriebenen Art erfindungsgemäß vorgeschlagen, dass die Trennwand in einem oder mehreren Bereichen, der höher als das Entlüftungsrohr angeordnet ist, eine Entlastungsöffnung belässt. Durch die Entlastungsöffnung wird verhindert, dass die Kammer in zwei abgetrennte Bereiche gegliedert wird. Dadurch kann ein Überdrück in dem Dampfabscheider verhindert werden. Hierdurch kann ein Fluss der Flüssigkeit beruhigt sein bzw. kann ein Blubbern der Flüssigkeit vermindert werden. Ferner ermöglicht die Entlastungsöffnung, dass der an der Trennwand von der Flüssigkeit abgetrennte Gasanteil zu dem Entlüftungsrohr geleitet werden kann. Somit kann das Abscheiden von einem Gasanteil von einer Flüssigkeit verbessert werden.

Ferner kann bei einem erfindungsgemäßen Dampfabscheider eine Flüssigkeit besonders stark erhitzt werden. So hat die Erfindung erkannt, dass durch die Verwendung des Dampfabscheiders eine Flüssigkeit, beispielsweise Wasser, bis auf 100°C, vorzugweise 97°C, erhitzt werden kann, ohne dass eine Gas- bzw. Dampfabtrennung den Flüssigkeitsaustritt aus dem Dampfabscheider beeinträchtigt. Hierdurch kann vorteilhaft eine Betriebstemperatur eines Heißwasserspenders, wie hierin beschrieben und/oder beansprucht, hoch sein.

Der erfindungsgemäße Dampfabscheider ist ferner dazu geeignet in einem hierin beschriebenen und/oder beanspruchten Verfahren verwendet zu werden. Somit kann ein Dampfabscheiden besonders effizient durchgeführt werden, insbesondere wenn sich der Dampfabscheider in einem wie nachfolgend beschriebenen und/oder beanspruchten Heißwasserspender befindet.

Dadurch, dass sich bei dem erfindungsgemäßen Dampfabscheider das Entlüftungsrohr oberhalb einer durch den Fluideinlass definierten Höhe der Kammer endet, kann ein besonders großes Volumen an Flüssig-Gas-Gemisch durch den Fluideinlass in die Kammer treten bzw. einen Pegelstand bilden. Somit kann relativ schnell ein großer Anteil an Gas von einer Flüssigkeit abgetrennt werden.

Die Abtrennung findet an der Trennwand statt, welche vorzugsweise als Abprallfläche fungiert, an der das eintretende Flüssig-Gas-Gemisch abprallt. Das Abprallen an der Trennwand erfolgt besonders effektiv, da sich die Trennwand von oben zumindest bis unterhalb der durch den Fluideinlass definierten Höhe erstreckt. Denn somit kann eine besonders große Abprallfläche durch die Trennwand ausgebildet sein. Nach erfolgtem Abprallen kann der abgetrennte Gasanteil in der Kammer gesammelt werden, so dass der Gasanteil den Fluss des Flüssigkeitsanteils aus dem Fluidauslass heraus nicht stört. Somit kann eine austretente Flüssigkeit besonders frei von Gasen, beispielsweise von Gasblasen, ausgeführt werden. Dies ist insbesondere vorteilhaft, wenn der Dampfabscheider in einem Heißwasserspender, insbesondere in einem Kaffeevollautomaten, eingebracht ist.

Bei einer vorteilhaften Ausgestaltung kann vorgesehen sein, dass der Fluideinlass vorzugsweise transversal auf die Trennwand gerichtet ist. Somit kann vorteilhaft das eintretende Flüssig-Gas-Gemisch auf die Trennwand prallen, wodurch eine Trennung des Gasanteils und des Flüssigkeitsanteils besonders effektiv durchgeführt werden kann.

Bei einer vorteilhaften Ausgestaltung kann vorgesehen sein, dass die Trennwand in horizontaler Richtung nicht an eine Kammerwand der Kammer anschließt. Somit kann eine Verbindungsöffnungen, insbesondere die hierin beschriebene, ausgebildet sein, sodass ein Flüssigkeitsanteil vorteilhaft die Kammer durchströmen kann. Insbesondere kann der Flüssigkeitsanteil durch einen großen und einen kleinen Teil der Kammer strömen. Somit kann ein Durchfluss des Flüssigkeitsanteils durch den Dampfabscheider vorteilhaft realisiert sein.

Bei einer vorteilhaften Ausgestaltung kann vorgesehen sein, dass der Fluidauslass einen größeren Öffnungsquerschnitt aufweist als der Fluideinlass. Hierdurch kann gewährleistet sein, dass eine Flüssigkeit schneller abgeführt wird als eintreten kann, was insbesondere dann von Vorteil ist, wenn durch den Aufprall des Flüssig-Gas-Gemischs an der Trennwand der Gasanteil vom Flüssigkeitsanteil getrennt wird. Durch die schnelle Abfuhr des Flüssigkeitsanteils kann verhindert werden, dass sich der getrennte Gasanteil wieder mit dem Flüssigkeitsanteil vermischt.

Bei einer vorteilhaften Ausgestaltung kann vorgesehen sein, dass die Trennwand vorzugsweise einstückig mit einem Kammerdeckel verbunden ist. Der Kammerdeckel kann als Wandung der Kammer ausgebildet sein, sodass vorteilhaft die Kammer durch den Kammerdeckel verschließbar sein kann. Durch eine einstückige Verbindung von Kammerdeckel und Trennwand werden zusätzliche Bauteile, beispielsweise Verbindungselemente, zur Konstruktion der Kammer nicht benötigt. Ferner von Vorteil kann sein, dass die Trennwand durch Anbringen des Kammerdeckels an die Kammer korrekt in der Kammer positioniert wird.

Bei einer vorteilhaften Ausgestaltung kann vorgesehen sein, dass die Trennwand an dem Entlüftungsrohr abgestützt ist. Hierdurch kann die Trennwand vorteilhaft an dem Entlüftungsrohr stabilisiert werden. Ebenso kann die Trennwand beim Einbringen in die Kammer durch das Entlüftungsrohr geführt werden, insbesondere dann, wenn wie hierin erwähnt, die Trennwand einstückig mit einem Kammerdeckel verbunden ist. Somit kann insgesamt eine Assemblierung eines Dampfabscheiders vereinfacht sein.

Bei einer vorteilhaften Ausgestaltung kann vorgesehen sein, dass der Fluidauslass auf einer niedrigeren Höhe als der Fluideinlass in die Kammer mündet. Somit kann vorteilhaft der Flüssigkeitsanteil, welcher in der Kammer befindlich ist und vorzugsweise von dem oder einem Gasanteil getrennt ist, vorzugsweise durch Gravitation, aus der Kammer fließen. Somit kann ein Abfließen der vom Gasanteil getrennten Flüssigkeit ohne weitere Vorrichtungen auskommen.

Bei einer vorteilhaften Ausgestaltung kann vorgesehen sein, dass die Trennwand auf einer Höhe unterhalb des Fluideinlasses mindestens eine Verbindungsöffnung hat. Die Verbindungsöffnung kann also zumindest teilweise durch die Trennwand ausgebildet sein. Durch diese Verbindungsöffnung kann ein Durchströmen der Flüssigkeit durch die Kammer erreicht werden, sodass der vorzugsweise vom Gasanteil getrennte Flüssigkeitsanteil beispielsweise zu dem Fluidauslass geführt werden kann.

Die Verbindungsöffnung kann sich dabei über eine Längsausdehnung, beispielsweise über einen Durchmesser, einer Grundfläche der Kammer erstrecken. Hierdurch kann ein besonders großes Volumen des Flüssigkeitsanteils die Kammer durchströmen. Alternativ können vorzugsweise über die Längsausdehnung wenigstens zwei Verbindungsöffnungen ausgebildet sein.

Bei einer vorteilhaften Ausgestaltung kann vorgesehen sein, dass ein Öffnungsquerschnitt der Verbindungsöffnung größer als ein, beispielsweise der bereitserwähnte, Öffnungsquerschnitt des Fluidauslasses ist. Somit kann mehr Flüssigkeitsanteil in Richtung Fluidauslass geführt werden, als Flüssigkeitsanteil durch den Fluidauslass austreten kann. Somit kann insbesondere ein Pegelstand ausgebildet bzw. gehalten werden, welcher dem Kammerbereich ist, in dem nicht der Fluideinlass mündet. Somit kann ein Gesamtpegelstand ausgebildet sein, welcher eine besonders große Fläche einnimmt, wodurch vorteilhaft ein besonders großer Gasanteil pro Zeit abgetrennt werden kann.

Bei einer vorteilhaften Ausgestaltung kann vorgesehen sein, dass ein, beispielsweise der bereits erwähnte, Öffnungsquerschnitt der Verbindungsöffnung größer als ein, beispielsweise der bereits erwähnte, Öffnungsquerschnitt des Fluideinlasses ist. Somit kann der Pegelstand in dem Kammerbereich, in dem der Fluideinlass mündet, ausgebildet werden. Hierdurch kann ein Gesamtpegelstand ausgebildet sein, welcher eine besonders große Fläche einnimmt, wodurch vorteilhaft besonders viel Gasanteil pro Zeit abgetrennt werden kann.

Besonders vorteilhaft kann ein Pegelstand ausgebildet sein und somit die Abtrennung eines Gasanteils effizient erreicht werden, wenn ein, beispielsweise der bereits erwähnte, Öffnungsquerschnitt der Verbindungsöffnung größer als ein, beispielsweise der bereits erwähnte, Öffnungsquerschnitt des Fluideinlasses und größer ein, beispielsweise der bereits erwähnte, Öffnungsquerschnitt des Fluidauslasses ist.

Bei einer vorteilhaften Ausgestaltung kann vorgesehen sein, dass der Fluideinlass in einer oberen Hälfte der Kammer mündet. Hierdurch kann die Kammer mit einem besonders großes Volumen, vorzugsweise wenigstens die Hälfte des Kammervolumens, an Flüssigkeit befüllt werden. Somit kann ein besonders großes Volumen der Flüssigkeit von einem Gasanteil getrennt und anschließend portioniert zu werden. Ferner ermöglicht der in der oberen Hälfte der Kammer positionierte Fluideinlass, dass ein Öffnungsquerschnitt einer Verbindungsöffnung, insbesondere der hierin beschriebenen, besonders groß ausgebildet werden kann. Dies kann die Abtrennung des Gasanteils von der Flüssigkeit noch weiter verbessern.

Bei einer vorteilhaften Ausgestaltung kann vorgesehen sein, dass sich die Trennwand von oben bis in eine untere Hälfte der Kammer erstreckt. Somit kann sich insbesondere die hierin beschriebene Verbindungsöffnung in Bodennähe der Kammer befinden und/oder nah an dem Fluidauslass positioniert sein.

Dadurch kann ein Durchströmen des Flüssigkeitsanteils von einem Teil der Kammer in einen anderen Teil der Kammer entfernt von der hierin beschriebenen Entlastungsöffnung stattfinden. Somit kann eine Flutung des Entlüftungsrohrs vermieden werden.

Bei einer vorteilhaften Ausgestaltung kann vorgesehen sein, dass sich die Trennwand von oben bis zu einer Höhe erstreckt, die wenigstens um ein lichtes Innenmaß des Fluideinlasses unterhalb dem Fluideinlass liegt. Somit kann gewährleistet sein, dass das gesamte Volumen des durch den Fluideinlass eintretenden Flüssig-Gas-Gemischs an der Trennwand abprallt. Hierdurch kann vorteilhaft der gesamte Flüssigkeitsanteil vom Gasanteil abgetrennt werden.

Alternativ und/oder zusätzlich kann vorgesehen sein, dass sich die Trennwand von oben bis zu einer Höhe erstreckt, die wenigstens um einen Abstand zwischen dem Fluideinlass und der Trennwand unterhalb dem Fluideinlass liegt. Hierdurch kann vorteilhaft verhindert werden, dass das Flüssig-Gas-Gemisch an der Trennwand abprallt und zurück in den Fluideinlass tritt und/oder dass ein Flüssigkeitsanteil und/oder ein Gasanteil durch den Fluideinlass treten.

Bei einer vorteilhaften Ausgestaltung kann vorgesehen sein, dass eine lichte Höhe der Kammer größer als eine lichte seitliche Abmessung ist. Somit kann eine Kammer vorteilhaft schmal, beispielsweise als Zylinder, ausgebildet sein. Eine schmale Ausgestaltung der Kammer bzw. des Dampfabscheiders kann insbesondere dann vorteilhaft sein, wenn der Dampfabscheider schmal ausgebildet sein soll, um beispielsweise in einem Heißwasserspender, insbesondere in einem Kaffeevollautomaten, wenig Platz einzunehmen.

Bei einer vorteilhaften Ausgestaltung kann vorgesehen sein, dass die Trennwand die Kammer in einen größeren Teil und einen kleineren Teil unterteilt. Eine Unterteilung der Kammer in einen großen und einen kleinen Teil kann eine Pegelstandbildung der Flüssigkeit optimieren. Ferner kann eine Gasanteil-abtrennung besonders effektiv sein, insbesondere, wenn der kleinere Teil der Kammer sich zwischen Fluideinlass und Trennwand befindet. Somit kann der Weg des Flüssig-Gas-Gemischs vom Fluideinlass zur Trennwand kurz ausgebildet sein, sodass das Flüssig-Gas-Gemisch mit einem hohen Druck an der Trennwand abprallt, was die Abtrennung begünstigen kann.

Bei einer vorteilhaften Ausgestaltung kann vorgesehen sein, dass sich die Entlastungsöffnung von unterhalb des Kammerdeckels bis zu einer Höhe erstreckt, die wenigstens um ein lichtes Innenmaß des Fluideinlasses oberhalb des Fluideinlasses liegt. Hierdurch kann genügend Fläche zwischen Aufprallpunkt des Flüssig-Gas-Gemischs an der Trennwand und der Entlastungsöffnung ausgebildet sein, sodass nach erfolgtem Aufprall des Flüssig-Gas-Gemischs wenig, bis keine Flüssigkeit durch die Entlastungsöffnung tritt. Hierdurch kann verhindert werden, dass Flüssigkeit in das Entlüftungsrohr gelangt.

Bei einer vorteilhaften Ausgestaltung kann vorgesehen sein, dass zumindest ein Großteil eines lichten Innenmaßes wenigstens einer Entlastungsöffnung nicht über eine vorzugsweise vertikale Symmetrieachse der Trennwand verläuft. Bei einer derartigen Ausgestaltung kann die wenigstens eine Entlastungsöffnung seitlich an der Trennwand angeordnet sein, sodass ein Übertritt der Flüssigkeit durch die Entlastungsöffnung nach dem Aufprall des Flüssig-Gas-Gemischs verhindert werden kann.

Es kann vorgesehen sein, dass wenigstens zwei Entlastungsöffnungen nebeneinander an der Trennwand angeordnet sind, insbesondere dass die lichten Innenmaße der Entlastungsöffnungen nicht über die vertikale Symmetrieachse der Trennwand verlaufen. Somit kann ferner ein Eintritt der Flüssigkeit in das Entlüftungsrohr verhindert werden.

Alternativ oder zusätzlich sind zur Lösung der genannten Aufgabe erfindungsgemäß die Merkmale des nebengeordneten, auf einen Heißwasserspender gerichteten Anspruchs vorgesehen. Insbesondere wird somit zur Lösung der genannten Aufgabe bei einem Heißwasserspender der eingangs beschriebenen Art erfindungsgemäß vorgeschlagen, dass der Heißwasserspender mit einer Heizeinheit zur Bereitstellung von heißem Wasser und einem an die Heizeinheit fluidisch angeschlossenen und wie hierin beschriebenen und/oder beanspruchten Dampfabscheider versehen ist. Somit kann ein Heißwasserspender spritzerfrei Heißwasser ausgeben. Durch die Verwendung eines hierin beschriebenen und/oder beanspruchten Dampfabscheiders kann die Heizeinheit Heißwasser und/oder Heißwassergetränk (beispielsweise eine Kaffeezubereitung) bis zu 100°C, vorzugweise 97°C, an den Dampfabscheider leiten, sodass der Heißwasserspender besonders heißes Wasser und/oder Heißwassergetränk spritzerfrei ausgeben kann.

Insbesondere kann vorgesehen sein, dass der Heißwasserspender als Kaffeevollautomat ausgebildet ist. Durch die hohen Betriebstemperaturen kann eine besonders aromatische und köstliche Kaffeezubereitung ausgegeben werden.

Alternativ oder zusätzlich sind zur Lösung der genannten Aufgabe erfindungsgemäß die Merkmale des nebengeordneten, auf ein Verfahren zur Reinigung eines Dampfabscheiders gerichteten Anspruchs vorgesehen. Insbesondere wird somit zur Lösung der genannten Aufgabe bei einem Verfahren zur Reinigung eines Dampfabscheiders der eingangs beschriebenen Art erfindungsgemäß vorgeschlagen, dass bei einem wie hierin beschriebenen und/oder beanspruchten Dampfabscheider die Kammer geflutet wird, bis Wasser aus dem Entlüftungsrohr austritt. Somit kann der gesamte Dampfabscheider in einem Reinigungsverfahren gereinigt werden. Durch den regelmäßigen Dampfabscheidungsprozess, beispielsweise durch ein hierin beschriebenes und/oder beanspruchtes Verfahren zum Dampfabscheiden, kann das Entlüftungsrohr des Dampfabscheiders mit Ablagerungen verschmutzt werden. Diese Ablagerungen können die Entlüftungsfunktion des Entlüftungsrohrs und somit die Performance des Dampfabscheiders beeinträchtigen. Somit ist es besonders von Vorteil, dass durch das erfindungsgemäße Reinigungsverfahren auch das Entlüftungsrohr gereinigt und von Ablagerungen, beispielsweise Kalkablagerungen, befreit werden kann.

Alternativ oder zusätzlich sind zur Lösung der genannten Aufgabe erfindungsgemäß die Merkmale des nebengeordneten, auf eine Verwendung eines Dampfabscheiders gerichteten Anspruchs vorgesehen. Insbesondere wird somit zur Lösung der genannten Aufgabe bei einer Verwendung der eingangs beschriebenen Art erfindungsgemäß vorgeschlagen, dass der Fluideinlass den Zulauf für das Flüssig-Gas-Gemisch bildet und/oder der Flüssigkeitsanteil sich in der Kammer sammelt und/oder der Gasanteil über das Entlüftungsrohr abgeführt wird und/oder der Fluidauslass den Ablauf des gesammelten Flüssigkeitsanteils bildet. Somit kann das Abscheiden von Dampf von einer Flüssigkeit besonders verbessert durchgeführt werden. Dies ist insbesondere dann von Vorteil, wenn der Dampfabscheider in dem zuvor erwähnten Kaffeevollautomaten zum Einsatz kommt. Somit kann eine besonders schmackhafte Kaffeezubereitung ohne Spritzer ausgegeben werden.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele, die innerhalb des Schutzumfangs der angehängten Ansprüche fallen.

Es zeigen:
- Fig. 1: einen erfindungsgemäßen Dampfabscheider während eines Dampfabscheidevorgangs,
- Fig. 2: einen erfindungsgemäßen und als Kaffeevollautomaten ausgebildeten Heißwasserspender mit dem Dampfabscheider aus Figur 1,
- Fig. 3: ein Heißwasserrohr des erfindungsgemäßen Dampfabscheiders aus Figur 1,
- Fig. 4: einen Kammerdeckel des erfindungsgemäßen Dampfabscheiders aus Figur 1.

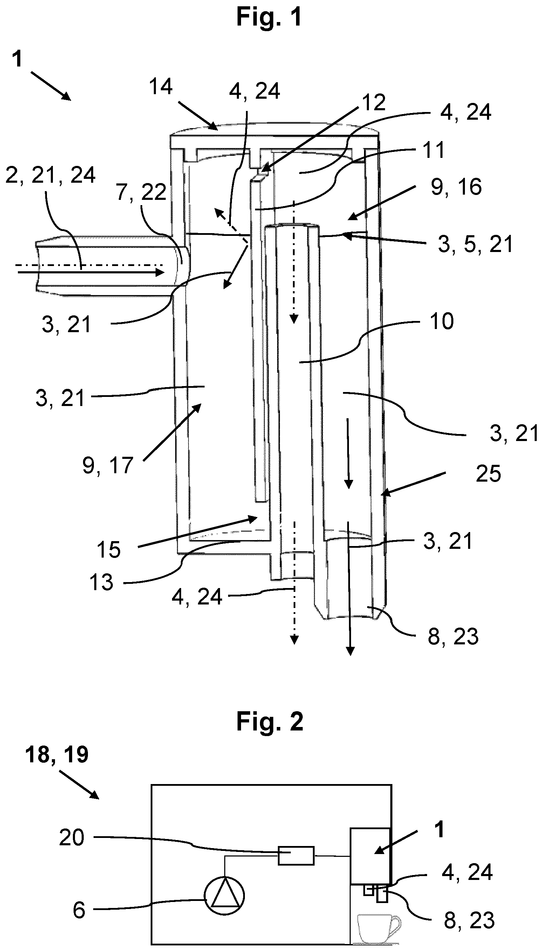

Figur 1 zeigt einen erfindungsgemäßen Dampfabscheider 1 während eines Dampfabscheidevorgangs. Dabei ist der Dampfabscheider 1 in einem erfindungsgemäßen und als Kaffeevollautomaten 19 ausgebildetem Heißwasserspender 18, wie er in Figur 2 abgebildet ist, eingebaut.

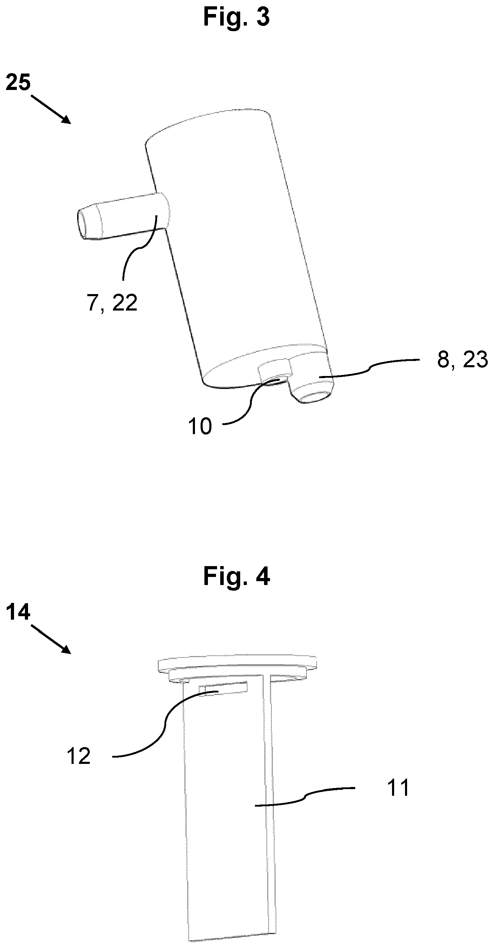

Der Dampfabscheider 1 ist aus einem Kammerdeckel 14 (Figur 4) und einem Heißwasserrohr 25 (Figur 3) zusammengesetzt. Im montierten Zustand sind der Kammerdeckel 14 und das Heißwasserrohr 25 unlösbar zusammengebaut, sodass der Dampfabscheider 1 besonders robust und wasserdicht ist, wodurch vorteilhaft ein Ausdringen von vorzugsweise Wasser 21 und/oder Reinigungsflüssigkeit aus dem Dampfabscheider 1 verhindert werden kann.

Der Dampfabscheider 1 in Figur 1 weist einen Fluideinlass 7 und einen Fluidauslass 8 auf und einer zwischen dem Fluideinlass 7 und dem Fluidauslass 8 angeordneten Kammer 9, wobei ein Entlüftungsrohr 10 oberhalb einer durch den Fluideinlass 7 definierten Höhe der Kammer 9 endet. So ist in Figur 1 gut zu erkennen, dass der Pegelstand 5 des Flüssigkeitsanteils 3, 23 oberhalb der Öffnung des Fluideinlasses 7 und unterhalb der Öffnung des Entlüftungsrohres 10 ausgebildet ist. Für einen vorteilhaften Ablauf des Flüssigkeitsanteils 3, 21 ist der Fluidauslass 8 so angeordnet, dass er unterhalb der Öffnung des Fluideinlasses 7 in die Kammer 9 mündet.

Die Kammer 9 des Dampfabscheiders 1 ist dabei so ausgebildet, dass ihre lichte Höhe größer als eine lichte seitliche Abmessung ist. So ist die Kammer 9 der Ausführungsform der Figur 1 zylinderförmig ausgebildet. Somit kann der Dampfabscheider 1 kompakt, vorzugsweise länglich, insbesondere als längliches Rohr ausgebildet sein, um platzsparend in einen Heißwasserspender 18, insbesondere den in Figur 2 dargestellten Kaffeevollautomaten 18,19, eingebaut zu werden.

Das durch ein als durchgehend/gestrichelter Doppelpfeil dargestellte Flüssig- (durchgehender Pfeil) Gas-(gestichelter Pfeil) Gemisch 2 gelangt über den Fluideinlass 7 in die Kammer **9.** Das in Figur 1 abgebildete Flüssig-Gas-Gemisch 2 hat als Flüssigkeitsanteil 3 Wasser 21 bzw. eine wässrige Lösung (beispielsweise Kaffee) und als Gasanteil 4 Wasserdampf 24, also eine Gasphase des erhitzten Wassers 21. Dabei kann ein Zulauf 22 des Flüssig-Gas-Gemischs 2, 21, 24 durch einen Phasenanschnitt an einer, einer Heizeinheit 20 vorgelagerten, Pumpe 6 des Heißwasserspenders 18, 19 gesteuert bzw. getaktet werden. (siehe Figur 2).

Das zulaufende Flüssig-Gas-Gemisch 2, 21, 24 prallt in der Kammer 9 an einer einstückig mit dem Kammerdeckel 14 verbundenen Trennwand 11 ab, welche sich von oben bis unterhalb der durch den Fluideinlass 7 definierten Höhe erstreckt. Dadurch wird gewährleistet, dass das gesamte eintretende Volumen des Flüssig-Gas-Gemischs 2, 21, 24 in einen Gasanteil 4, 24 und einen Flüssigkeitsanteil 3, 21 getrennt wird.

Der Fluideinlass 7 ist transversal auf die Trennwand 11 gerichtet, sodass das Flüssig-Gas-Gemisch 2, 21, 24 auf die Trennwand prallen, wodurch die Trennung des Gasanteils 4, 24 vom Flüssigkeitsanteil 3, 21 besonders effektiv durchgeführt, wie es in Figur 1 schematisch anhand des von der Trennwand 11 abgehenden gestrichelten Pfeil (4, 24) und des von der Trennwand 11 abgehenden durchgehenden Pfeil (3, 21) dargestellt ist.

Die Trennwand 11 ist an dem Entlüftungsrohr 10 abgestützt, bildet also vorzugsweise einen Kontaktierungsbereich mit dem Entlüftungsrohr 10 aus, und ist somit optimal in der Kammer 9 positioniert, sodass die Kammer 9 in einen größeren Teil 16 und einen kleineren Teil 17 unterteilt ist, wobei der größere Teil 16 mit dem Fluidauslass 8 und der kleinere Teil 17 mit dem Fluideinlass 7 verbunden ist. Hierdurch kann eine Abtrennung des Gasanteils 4, 24 vom Flüssigkeitsanteil 3, 21 besonders effektiv sein, da der Weg des Flüssig-Gas-Gemischs 2, 21, 24 vom Fluideinlass 7, 22 zur Trennwand 11 relativ kurz ausgebildet ist.

Der abgetrennte Gasanteil 4, 24 kann über die Entlastungsöffnung 12 in Richtung Entlüftungsrohr 10 entweichen. Die Entlastungsöffnung 12 ist in einem oder mehreren Bereichen höher als das Entlüftungsrohr 10 angeordnet. Durch die Entlastungsöffnung 12 wird ferner verhindert, dass ein Überdruck in der Kammer 9 entsteht. Würde nämlich keine Entlastungsöffnung 12 in der Trennwand 11, wie beispielsweise in Figur 1 dargestellt, sein, könnte es zu Überdruck in der Kammer 9 führen, die zumindest den Dampfabscheider 1 beschädigen kann.

Die Entlastungsöffnung 12 erstreckt sich von unterhalb des Kammerdeckels 14 bis zu einer Höhe, die um ein lichtes Innenmaß des Fluideinlasses 7 oberhalb des Fluideinlasses 7 liegt. Somit kann verhindert werden, dass ein Flüssigkeitsanteil 3, 21, insbesondere während der Abtrennung des Gasanteils 4, 24 vom Flüssigkeitsanteil 3, 21, durch die Entlastungsöffnung 12 in das Entlüftungsrohr 10 gelangt.

Alternativ oder zusätzlich könnte ein Überschwappen eines Flüssigkeitsanteils 3, 21 in das Entlüftungsrohr 10 damit verhindert werden, dass zumindest ein Großteil eines lichten Innenmaßes wenigstens einer Entlastungsöffnung 12 nicht über eine vorzugsweise vertikale Symmetrieachse der Trennwand 11 verläuft. So können beispielsweise zwei Entlastungsöffnungen 12 nicht mittig, sondern am Rand einer, beispielsweise der bereits erwähnten, Trennwand 11 positioniert sein (nicht gezeigt).

Zur Durchströmung des Flüssigkeitsanteils 3, 21 vom kleineren Teil 17 in den größeren Teil 16 der Kammer 9 hat die Trennwand 11 auf einer Höhe unterhalb des Fluideinlasses 7 eine Verbindungsöffnung 15, welche einen Öffnungsquerschnitt hat, der größer die Öffnungsquerschnitte des Fluideinlasses 7 und des Fluidauslasses 8 sind. Die Verbindungsöffnung 15 wird auch teilweise durch ein vorzugsweise horizontal ausgerichteten Kammerwand 13 ausgebildet, an die sich die Trennwand 11 in horizontaler Richtung dicht anschließt.

In Figur 1 ist auch zu erkennen, dass der der Fluidauslass 8 einen größeren Öffnungsquerschnitt aufweist als der Fluideinlass 7. Somit kann verhindert werden, dass der Pegelstand 3, 5, 21 nicht über eine Öffnung des Entlüftungsrohrs 10 steigt und dieses flutet, da mehr Flüssigkeit 3, 21 über den Fluidauslass 8 abfließen kann, als über den Fluideinlass 7 in die Kammer 9 gelangt.

Im Folgenden wird ein mögliches Verfahren zum Dampfabscheiden beschrieben, wobei ein hierin beschriebener Dampfabscheider 1, insbesondere der in Figur 1 offenbarte, Verwendung in einem Kaffeevollautomaten 18, 19 findet, wie er in Figur 2 gezeigt ist.

Bei dem Verfahren zum Dampfabscheiden sammelt sich der Flüssigkeitsanteil 3, 21 des bis zu 100°C heißen Flüssig-Gas-Gemischs 2, 21, 24 (hier vorzugsweise Wasser) in der Kammer 9 und der Gasanteil 4, 24 wird oberhalb des gesammelten Flüssigkeitsanteils 3, 21 abgeführt und weiter durch das Entlüftungsrohr 10 aus den Dampfabscheider 1 ausgebracht (Figur 1).

Dabei wird der Zulauf 22 an Flüssig-Gas-Gemisch 2, 21, 24 und ein Ablauf 23 des gesammelten Flüssigkeitsanteils 3, 21 so bemessen, dass sich ein Pegelstand 5 des Flüssigkeitsanteils 3, 21 in der Kammer 9 ausbildet (Figur 1). Somit kann eine Abtrennung des Gasanteils 4, 24 optimal durchgeführt werden.

Das Flüssig-Gas-Gemisch 2, 21, 24 wird in dem Verfahren dem gesammelten Flüssigkeitsanteil 3, 21 unterhalb dessen Pegelstands 5 zugeführt. Hierdurch wird verhindert, dass nachströmendes Flüssig-Gas-Gemisch 2, 21, 24 auf der Oberfläche des Pegelstandes 5 des gesammelten Flüssigkeitsanteil 3, 21 abprallt und Spritzer verursacht, die beispielsweise über die Entlastungsöffnung 12 in das Entlüftungsrohr 10 gelangen.

Insgesamt führt das Verfahren zu einer verbesserten Dampfabscheidung. Somit kann vorteilhaft verhindert werden, dass die auszugebende Flüssigkeit 3, 21, beispielsweise Wasser, unregelmäßig und/oder mit Spritzern den Kaffeevollautomaten verlässt. Durch die Verwendung des Dampfabscheiders 1 bzw. durch Ausführung des beschriebenen Verfahrens kann eine Betriebstemperatur von bis zu 100°C verwendet werden, da der Gasanteil 4, 24 von dem Flüssigkeitsanteil 3, 21 getrennt wird. Somit kann insbesondere die Qualität eines Kaffee-Wasser-Produktes, z.B. Caffè Americano, oder eines sonstigen Heißwassergetränks, z.B. Tee, verbessert sein, da eine höhere Betriebstemperatur zu einem besseren Genusserlebnis führen kann, so wie es in den hier beschriebenen Ausführungsformen der Fall ist.

Die Steuerung des Zulaufs 22 des Flüssig-Gas-Gemischs 2, 21, 24 wird durch einen Phasenschnitt an einer Pumpe 6 gesteuert. Somit kann beispielsweise der Volumenstrom pro Zeit über den Fluideinlass 7 geregelt werden. Es kann im Verfahren zur Reinigung eines Dampfabscheiders 1 vorgesehen sein, dass vorzugsweise der Zulauf 22 an Wasser 21 durch einen Phasenschnitt der Pumpe 6 gesteuert wird, sodass die Kammer 9 geflutet wird, bis Wasser 21 aus dem Entlüftungsrohr 10 austritt. Somit kann auch das Entlüftungsrohr 10 gereinigt und von Kalkablagerungen befreit werden. Hierdurch kann der Kaffeevollautomat 18, 19 besonders langlebig sein, was besonders kundenfreundlich ist.

Der Inhalt der Offenbarung schlägt allgemein einen Dampfabscheider 1, einen Heißwasserspender 18, 19 und ein Verfahren zum Dampfabscheiden aus einem Flüssig-Gas-Gemisch 2, wobei sich ein Flüssigkeitsanteil 3 des Flüssig-Gas-Gemischs 2 sammelt und wobei ein Gasanteil 4 oberhalb des gesammelten Flüssigkeitsanteils 3 abgeführt wird, insbesondere wobei der Gasanteil 4 eine Gasphase des Flüssigkeitsanteils 3 ist, vor.

Die Erfindung ist insbesondere in der Genussmittelindustrie von Interesse, jedoch nicht auf diesen Bereich reduziert.

### Bezugszeichenliste

- 1: Dampfabscheider
- 2: Flüssig-Gas-Gemisch
- 3: Flüssigkeitsanteil
- 4: Gasanteil
- 5: Pegelstand
- 6: Pumpe
- 7: Fluideinlass
- 8: Fluidauslass
- 9: Kammer
- 10: Entlüftungsrohr
- 11: Trennwand
- 12: Entlastungsöffnung
- 13: Kammerwand
- 14: Kammerdeckel
- 15: Verbindungsöffnung
- 16: größerer Teil von 9
- 17: kleinerer Teil von 9
- 18: Heißwasserspender
- 19: Kaffeevollautomat
- 20: Heizeinheit
- 21: Wasser
- 22: Zulauf von 2
- 23: Ablauf von 3
- 24: Wasserdampf
- 25: Heißwasserrohr

## Patentansprüche

1. Dampfabscheider (1), mit einem Fluideinlass (7) und einem Fluidauslass (8) und einer zwischen dem Fluideinlass (7) und dem Fluidauslass (8) angeordneten Kammer (9), wobei mindestens ein Entlüftungsrohr (10) vorhanden ist, das oberhalb einer durch den Fluideinlass (7) definierten Höhe der Kammer (9) endet, wobei zwischen dem Fluideinlass (7) und dem Entlüftungsrohr (10) eine Trennwand (11) ausgebildet ist, die sich vorzugsweise von oben zumindest bis unterhalb der durch den Fluideinlass (7) definierten Höhe erstreckt, **dadurch gekennzeichnet, dass** die Trennwand (11) in wenigstens einem Bereich, der höher als das Entlüftungsrohr (10) angeordnet ist, eine Entlastungsöffnung (12) belässt.

2. Dampfabscheider (1) nach Anspruch 1, **dadurch gekennzeichnet, dass** der Fluideinlass (7) vorzugsweise transversal auf die Trennwand (11) gerichtet ist.

3. Dampfabscheider (1) nach einem auf einen Dampfabscheider (1) gerichteten Anspruch, **dadurch gekennzeichnet, dass** die Trennwand (11) in horizontaler Richtung dicht an eine Kammerwand (13) der Kammer (9) anschließt und/oder dass der Fluidauslass (8) einen größeren Öffnungsquerschnitt aufweist als der Fluideinlass (7) und/oder dass die Trennwand (11) vorzugsweise einstückig mit einem Kammerdeckel (14) verbunden ist.

4. Dampfabscheider (1) nach einem auf einen Dampfabscheider (1) gerichteten Anspruch, **dadurch gekennzeichnet, dass** die Trennwand (11) an dem Entlüftungsrohr (10) abgestützt ist und/oder dass der Fluidauslass (8) auf einer niedrigeren Höhe als der Fluideinlass (7) in die Kammer (9) mündet.

5. Dampfabscheider (1) nach einem auf einen Dampfabscheider (1) gerichteten Anspruch, **dadurch gekennzeichnet, dass** die Trennwand (11) auf einer Höhe unterhalb des Fluideinlasses (7) mindestens eine Verbindungsöffnung (15) hat, insbesondere wobei ein Öffnungsquerschnitt der Verbindungsöffnung (15) größer als der oder ein Öffnungsquerschnitt des Fluidauslasses (8) ist, und/oder dass der oder ein Öffnungsquerschnitt der Verbindungsöffnung (15) größer als der oder ein Öffnungsquerschnitt des Fluideinlasses (7) ist und/oder dass der Fluideinlass (7) in einer oberen Hälfte der Kammer (9) mündet.

6. Dampfabscheider (1) nach einem auf einen Dampfabscheider (1) gerichteten Anspruch, **dadurch gekennzeichnet, dass** sich die Trennwand (11) von oben bis in eine untere Hälfte der Kammer (9) erstreckt und/oder dass sich die Trennwand (11) von oben bis zu einer Höhe erstreckt, die wenigstens um ein lichtes Innenmaß des Fluideinlasses (7) und/oder wenigstens um einen Abstand zwischen dem Fluideinlass (7) und der Trennwand (11) unterhalb dem Fluideinlass (7) liegt.

7. Dampfabscheider (1) nach einem auf einen Dampfabscheider (1) gerichteten Anspruch, **dadurch gekennzeichnet, dass** eine lichte Höhe der Kammer (9) größer als eine lichte seitliche Abmessung ist und/oder dass die Trennwand (11) die Kammer (9) in einen größeren Teil (16) und einen kleineren Teil (17) unterteilt, insbesondere wobei der größere Teil (16) mit dem Fluidauslass (8) und/oder der kleinere Teil (17) mit dem Fluideinlass (7) verbunden ist.

8. Dampfabscheider (1) nach Anspruch 5, **dadurch gekennzeichnet, dass** sich die Entlastungsöffnung (12) von unterhalb des Kammerdeckels (14) bis zu einer Höhe erstreckt, die wenigstens um ein lichtes Innenmaß des Fluideinlasses (7) oberhalb des Fluideinlasses (7) liegt.

9. Dampfabscheider (1) nach einem auf einen Dampfabscheider (1) gerichteten Anspruch, **dadurch gekennzeichnet, dass** zumindest ein Großteil eines lichten Innenmaßes wenigstens einer Entlastungsöffnung (12) nicht über eine vorzugsweise vertikale Symmetrieachse der Trennwand (11) verläuft.

10. Verfahren zum Dampfabscheiden aus einem Flüssig-Gas-Gemisch (2), mit einem Dampfabscheider (1) nach Anspruch 1, wobei sich ein Flüssigkeitsanteil (3) des Flüssig-Gas-Gemischs (2) sammelt und wobei ein Gasanteil (4) oberhalb des gesammelten Flüssigkeitsanteils (3) abgeführt wird, insbesondere wobei der Gasanteil (4) eine Gasphase des Flüssigkeitsanteils (3) ist und/oder wobei ein Zulauf (22) an Flüssig-Gas-Gemisch (2) und ein Ablauf (23) des gesammelten Flüssigkeitsanteils (3) so bemessen ist, dass sich ein Pegelstand (5) des Flüssigkeitsanteils (3) ausbildet.

11. Verfahren nach dem vorangehenden, auf ein Verfahren gerichteten Anspruch, **dadurch gekennzeichnet, dass** nachströmendes Flüssig-Gas-Gemisch (2) dem gesammelten Flüssigkeitsanteil (3) zugeführt wird und/oder dass in einem Reinigungsschritt ein Zulauf (22) an Flüssig-Gas-Gemisch (2) derart erhöht und/oder ein Ablauf (23) des gesammelten Flüssigkeitsanteils (3) derart verringert wird, dass eine Abführung für den Gasanteil (4) geflutet wird, insbesondere wobei eine Temperatur des Flüssig-Gas-Gemischs (2) derart reduziert wird, dass der Gasanteil (3) reduziert ist oder gegen Null geht.

12. Verfahren nach einem der vorangehenden, auf ein Verfahren gerichteten Ansprüche, **dadurch gekennzeichnet, dass** ein Zulauf (22) an Flüssig-Gas-Gemisch (2) durch einen Phasenanschnitt an einer Pumpe (6) gesteuert wird.

13. Heißwasserspender (18), insbesondere einen Kaffeevollautomat (19), mit einer Heizeinheit (20) zur Bereitstellung von heißem Wasser und einem an die Heizeinheit (20) fluidisch angeschlossenen Dampfabscheider (1) nach einem auf einen Dampfabscheider (1) gerichteten Anspruch.

14. Verfahren zur Reinigung eines Dampfabscheiders (1) nach einem der Ansprüche 1 bis 9, **dadurch gekennzeichnet, dass** die Kammer (9) geflutet wird, bis Wasser (21) aus dem Entlüftungsrohr (10) austritt.

15. Verwendung eines Dampfabscheiders (1) nach einem der Ansprüche 1 bis 9 bei einem Verfahren nach einem der Ansprüche 10 bis 12, insbesondere wobei der Fluideinlass (7) den Zulauf (22) für das Flüssig-Gas-Gemisch (2) bildet und/oder der Flüssigkeitsanteil (3) sich in der Kammer (9) sammelt und/oder der Gasanteil (4) über das Entlüftungsrohr (10) abgeführt wird und/oder der Fluidauslass (8) den Ablauf (23) des gesammelten Flüssigkeitsanteils (3) bildet.

## Claims

1. Vapor separator (1), having a fluid inlet (7) and a fluid outlet (8) and a chamber (9) arranged between the fluid inlet (7) and the fluid outlet (8), wherein at least one vent pipe (10) is provided which ends above a height of the chamber (9) defined by the fluid inlet (7), wherein a partition wall (11) is formed between the fluid inlet (7) and the vent pipe (10), which partition wall preferably extends from above at least to below the height defined by the fluid inlet (7), **characterized in that** the partition wall (11) leaves a relief opening (12) in at least one area that is arranged higher than the vent pipe (10).

2. Vapor separator (1) according to claim 1, **characterized in that** the fluid inlet (7) is preferably directed transversely to the partition wall (11).

3. Vapor separator (1) according to a claim directed to a vapor separator (1), **characterized in that** the partition wall (11) tightly adjoins a chamber wall (13) of the chamber (9) in a horizontal direction and/or **in that** the fluid outlet (8) has a larger opening cross-section than the fluid inlet (7) and/or **in that** the partition wall (11) is preferably connected in one piece to a chamber cover (14).

4. Vapor separator (1) according to a claim directed to a vapor separator (1), **characterized in that** the partition wall (11) is supported on the vent pipe (10) and/or **in that** the fluid outlet (8) opens into the chamber (9) at a lower level than the fluid inlet (7).

5. Vapor separator (1) according to a claim directed to a vapor separator (1), **characterized in that** the partition wall (11) has at least one connecting opening (15) at a height below the fluid inlet (7), in particular wherein an opening cross-section of the connecting opening (15) is larger than the or an opening cross-section of the fluid outlet (8), and/or **in that** the or an opening cross-section of the connecting opening (15) is larger than the or an opening cross-section of the fluid inlet (7), and/or **in that** the fluid inlet (7) opens into an upper half of the chamber (9).

6. Vapor separator (1) according to a claim directed to a vapor separator (1), **characterized in that** the partition wall (11) extends from above into a lower half of the chamber (9) and/or **in that** the partition wall (11) extends from above to a height which is at least equal to a clear internal dimension of the fluid inlet (7) and/or at least by a distance between the fluid inlet (7) and the partition wall (11) below the fluid inlet (7).

7. Vapor separator (1) according to a claim directed to a vapor separator (1), **characterized in that** a clear height of the chamber (9) is greater than a clear lateral dimension and/or **in that** the partition wall (11) divides the chamber (9) into a larger part (16) and a smaller part (17), in particular wherein the larger part (16) is connected to the fluid outlet (8) and/or the smaller part (17) is connected to the fluid inlet (7).

8. Vapor separator (1) according to claim 5, **characterized in that** the relief opening (12) extends from below the chamber cover (14) to a height which lies above the fluid inlet (7) by at least a clear internal dimension of the fluid inlet (7).

9. Vapor separator (1) according to a claim directed to a vapor separator (1), **characterized in that** at least a large part of a clear internal dimension of at least one relief opening (12) does not extend across a preferably vertical axis of symmetry of the partition wall (11).

10. Method for separating vapor from a liquid-gas mixture (2), having a vapor separator (1) according to claim 1, wherein a liquid portion (3) of the liquid-gas mixture (2) collects and wherein a gas portion (4) is discharged above the collected liquid portion (3), in particular wherein the gas portion (4) is a gas phase of the liquid portion (3) and/or wherein an inlet (22) for the liquid-gas mixture (2) and an outlet (23) for the collected liquid portion (3) are dimensioned such that a level (5) of the liquid portion (3) is formed.

11. Method according to the preceding claim directed to a method, **characterized in that** subsequent liquid-gas mixture (2) is fed to the collected liquid portion (3) and/or **in that**, in a purification step, an inlet (22) for liquid-gas mixture (2) is increased and/or an outlet (23) for the collected liquid portion (3) is reduced in such a way that a discharge for the gas portion (4) is flooded, in particular wherein a temperature of the liquid-gas mixture (2) is reduced in such a way that the gas portion (3) is reduced or approaches zero.

12. Method according to one of the preceding claims directed to a method, **characterized in that** an inlet (22) for liquid-gas mixture (2) is controlled by a phase cut at a pump (6).

13. Hot water dispenser (18), in particular a fully automatic coffee machine (19), having a heating unit (20) for supplying hot water and a vapor separator (1), which is fluidically connected to the heating unit (20), according to a claim directed to a vapor separator (1).

14. Method for cleaning a vapor separator (1) according to one of claims 1 to 9, **characterized in that** the chamber (9) is flooded until water (21) emerges from the vent pipe (10).

15. Use of a vapor separator (1) according to one of claims 1 to 9 in a method according to one of claims 10 to 12, in particular wherein the fluid inlet (7) forms the inlet (22) for the liquid-gas mixture (2) and/or the liquid portion (3) collects in the chamber (9) and/or the gas portion (4) is discharged via the vent pipe (10) and/or the fluid outlet (8) forms the outlet (23) for the collected liquid portion (3).

## Revendications

1. Séparateur de vapeur (1) comprenant une entrée de fluide (7) et une sortie de fluide (8) ainsi qu'une chambre (9) disposée entre l'entrée de fluide (7) et la sortie de fluide (8), au moins un tuyau de purge d'air (10) étant prévu, qui se termine au-dessus d'une hauteur de la chambre (9) définie par l'entrée de fluide (7), une paroi de séparation (11) étant formée entre l'entrée de fluide (7) et le tuyau de purge d'air (10), laquelle s'étend de préférence depuis le haut au moins jusqu'en dessous de la hauteur définie par l'entrée de fluide (7), **caractérisé en ce que** la paroi de séparation (11) laisse une ouverture de décharge (12) dans au moins une zone qui est disposée plus haut que le tuyau de purge d'air (10).

2. Séparateur de vapeur (1) selon la revendication 1, **caractérisé en ce que** l'entrée de fluide (7) est de préférence orientée transversalement à la paroi de séparation (11).

3. Séparateur de vapeur (1) selon une revendication relative à un séparateur de vapeur (1), **caractérisé en ce que** la paroi de séparation (11) se raccorde de manière étanche dans la direction horizontale à une paroi de chambre (13) de la chambre (9) et/ou **en ce que** la sortie de fluide (8) présente une section d'ouverture plus grande que l'entrée de fluide (7) et/ou **en ce que** la paroi de séparation (11) est de préférence reliée d'une seule pièce à un couvercle de chambre (14).

4. Séparateur de vapeur (1) selon une revendication relative à un séparateur de vapeur (1), **caractérisé en ce que** la paroi de séparation (11) est appuyée contre le tuyau de purge d'air (10) et/ou **en ce que** la sortie de fluide (8) débouche dans la chambre (9) à une hauteur inférieure à celle de l'entrée de fluide (7).

5. Séparateur de vapeur (1) selon une revendication relative à un séparateur de vapeur (1), **caractérisé en ce que** la paroi de séparation (11) présente, à une hauteur située en dessous de l'entrée de fluide (7), au moins une ouverture de liaison (15), en particulier une section d'ouverture de l'ouverture de liaison (15) étant supérieure à la ou à une section d'ouverture de la sortie de fluide (8), et/ou **en ce que** la ou une section d'ouverture de l'ouverture de liaison (15) est supérieure à la ou à une section d'ouverture de l'entrée de fluide (7) et/ou **en ce que** l'entrée de fluide (7) débouche dans une moitié supérieure de la chambre (9).

6. Séparateur de vapeur (1) selon une revendication relative à un séparateur de vapeur (1), **caractérisé en ce que** la paroi de séparation (11) s'étend depuis le haut jusqu'à une moitié inférieure de la chambre (9) et/ou **en ce que** la paroi de séparation (11) s'étend depuis le haut jusqu'à une hauteur qui est au moins égale à une dimension intérieure libre de l'entrée de fluide (7) et/ou d'au moins une distance entre l'entrée de fluide (7) et la paroi de séparation (11) en dessous de l'entrée de fluide (7).

7. Séparateur de vapeur (1) selon une revendication relative à un séparateur de vapeur (1), **caractérisé en ce qu'**une hauteur libre de la chambre (9) est supérieure à une dimension latérale libre et/ou **en ce que** la paroi de séparation (11) divise la chambre (9) en une partie plus grande (16) et une partie plus petite (17), en particulier la partie plus grande (16) étant reliée à la sortie de fluide (8) et/ou la partie plus petite (17) étant reliée à l'entrée de fluide (7).

8. Séparateur de vapeur (1) selon la revendication 5, **caractérisé en ce que** l'ouverture de décharge (12) s'étend depuis le dessous du couvercle de chambre (14) jusqu'à une hauteur qui se situe d'au moins une dimension intérieure libre de l'entrée de fluide (7) au-dessus de l'entrée de fluide (7).

9. Séparateur de vapeur (1) selon une revendication relative à un séparateur de vapeur (1), **caractérisé en ce qu'**au moins une grande partie d'une dimension intérieure libre d'au moins une ouverture de décharge (12) ne s'étend pas sur un axe de symétrie de préférence vertical de la paroi de séparation (11).

10. Procédé de séparation de vapeur d'un mélange liquide-gaz (2) à l'aide d'un séparateur de vapeur (1) selon la revendication 1, dans lequel une partie liquide (3) du mélange liquide-gaz (2) s'accumule et une partie gazeuse (4) est évacuée au-dessus de la partie liquide accumulée (3), en particulier dans lequel la partie gazeuse (4) est une phase gazeuse de la partie liquide (3) et/ou dans lequel une arrivée (22) du mélange liquide-gaz (2) et un départ (23) de la partie liquide accumulée (3) sont dimensionnés de telle sorte qu'il se forme un niveau (5) de la partie liquide (3).

11. Procédé selon la revendication précédente, relative à un procédé, **caractérisé en ce que** le mélange liquide-gaz (2) qui continuer d'affluer est amené à la partie liquide accumulée (3) et/ou **en ce que**, dans une étape de nettoyage, une arrivée (22) de mélange liquide-gaz (2) est augmentée et/ou un départ (23) de la partie liquide accumulée (3) est diminué de telle sorte qu'une évacuation pour la partie gazeuse (4) est inondée, en particulier une température du mélange liquide-gaz (2) étant réduite de telle sorte que la partie gazeuse (3) est réduite ou tend vers zéro.

12. Procédé selon l'une des revendications précédentes, relative à un procédé, **caractérisé en ce qu'**une arrivée (22) de mélange liquide-gaz (2) est commandée par une coupure de phase au niveau d'une pompe (6).

13. Distributeur d'eau chaude (18), en particulier machine à café automatique (19), avec une unité de chauffage (20) pour fournir de l'eau chaude et un séparateur de vapeur (1) raccordé fluidiquement à l'unité de chauffage (20) selon une revendication relative à un séparateur de vapeur (1).

14. Procédé de nettoyage d'un séparateur de vapeur (1) selon l'une des revendications 1 à 9, **caractérisé en ce que** la chambre (9) est inondée jusqu'à ce que de l'eau (21) sorte du tuyau de purge d'air (10).

15. Utilisation d'un séparateur de vapeur (1) selon l'une des revendications 1 à 9 dans un procédé selon l'une des revendications 10 à 12, en particulier dans lequel l'entrée de fluide (7) forme l'arrivée (22) pour le mélange liquide-gaz (2) et/ou la partie liquide (3) s'accumule dans la chambre (9) et/ou la partie gazeuse (4) est évacuée par le tuyau de purge d'air (10) et/ou la sortie de fluide (8) forme le départ (23) de la partie liquide accumulée (3).
